# EUROPÄISCHE PATENTSCHRIFT

(11) **EP 1 426 721 B1**
(45) Veröffentlichungstag und Bekanntmachung des Hinweises auf die Patenterteilung: **17.03.2010**
(21) Anmeldenummer: 03025115.1
(22) Anmeldetag: 03.11.2003
(51) Int. Cl.: F28F 1/14

(54) **Wärmeaustauscherelement**
Element for heat exchanger
Element d'échangeur de chaleur

(30) Priorität: 05.12.2002 DE 10257103
(43) Veröffentlichungstag der Anmeldung: 09.06.2004
(73) Patentinhaber: Schmöle GmbH, 58730 Fröndenberg (DE)
(72) Erfinder: Bitter, Dieter, 57413 Finnentrop (DE); Maiwurm, Günter, 58708 Menden (DE)
(74) Vertreter: Pietrzykowski, Anja

(56) Entgegenhaltungen:
- DE-A1- 19 608 599
- JP-A- 55 038 429
- US-A- 2 795 035
- US-A- 3 703 758

## Beschreibung

Die Erfindung betrifft ein Wärmeaustauscherelement, das ein mit einem Kühl- oder Heizmedium beaufschlagbares schlangenlinienförmiges Rohrregister aufweist.

Durch die US 3,703,758 A ist es bekannt, schlangenlinienförmige Rohrregister mit einer Trägerplatte zu verkleben. Dies kann unter dem Einfluss von Hitze erfolgen. Bei metallischen Bauteilen kann es sich bei dem Klebstoff um ein Lot handeln.

Durch die US 2,795,035 A zählt es zum Stand der Technik, den Klebstoff in die Seitenbereiche des Rohrregisters zu verdrängen, da der Klebstoff den Wärmeübergang behindern kann. Durch das Verdrängen des Klebstoffs in die seitlichen Bereiche können die in der Regel dünnwandigen Rohrregister abgeflacht werden, so dass sich eine unrunde Form ergibt. Das wird auch in der JP 55 038429 A beschrieben.

Ferner zählt es zum Stand der Technik, Kühldecken mit eingelegten Kühlplatinen bzw. Wärmeleitelementen so zu verkleben, dass zwischen den zu verklebenden Flächen kein Klebstoff vorhanden ist und somit ein optimaler wärmeleitender Kontakt hergestellt wird (DE 196 08 599 A1). Es werden hierzu entsprechend stabile Wärmeleitelemente aus Blech geformt, die nur an den Rändern mit Klebstoff oder auch mit zusätzlichen Plättchen mit der zu kühlenden Tragplatte verklebt werden. Hierbei wird das Medium führende Rohr von den Wärmeleitelementen formschlüssig umfasst. Auch diese Vorgehensweise ist relativ aufwendig, da eine Vielzahl von Klebepunkten gesetzt werden müssen und zudem hinreichend stabilde Wärmeleitelemente eingesetzt werden müssen, da die Verbindung zwischen dem Medium führenden Rohr und der Tragplatte nicht in unmittelbarer Nähe des Rohrs, sondern entfernt vom Rohr erfolgt.

Ein Wärmeaustauscherelement zählt auch durch die DE 198 50 013 A1 zum Stand der Technik. Es setzt sich aus einer Wärmeleitfolie, einem schlangenlinienförmigen Rohrregister, einer Basisschicht aus Streckmetall und aus einer Klebefolie mit auf beiden Seiten angeordneten Klebeschichten zusammen. Alle vier Bestandteile des Wärmeaustauscherelements müssen gesondert hergestellt und größenordnungsmäßig einander angepasst werden. Die Klebefolie muss auf beiden Seiten mit einer Klebeschicht versehen werden, wobei die Klebeschichten bis zur Montage mit Schutzfolien abgedeckt sind.

Bei der Montage des Wärmeaustauscherelements werden die vier Bauteile nach dem Abziehen der Schutzfolie auf der dem Streckmetall zugewandten Seite der Klebefolie so zusammengedrückt, dass sich die Klebefolie mit der Wärmeleitfolie über die Ausnehmungen im Streckmetall verbindet und hierdurch das Rohrregister an der Basisschicht fixiert.

Dieses Wärmeaustauscherelement wird dann auf einer Baustelle mit einer wand- oder deckenseitig festzulegenden Tragplatte aus Metall oder Gipskarton verbunden, und zwar dadurch, dass auch auf der zweiten Seite der Klebefolie die Schutzfolie abgezogen und über die dann frei liegende Klebeschicht das Wärmeaustauscherelement an der Tragplatte befestigt wird.

Da es sich bei einem derartigen auf einer Tragplatte angeordneten Wärmeaustauscherelement um einen ausgesprochenen Massenartikel handelt, bedeutet jedes Einzelteil und jeder Verfahrensschritt bis zur Endmontage einen erhöhten Aufwand. Dieser Aufwand ist im bekannten Fall zeit-, material- und personalintensiv.

Der Erfindung liegt - ausgehend vom Stand der Technik - die Aufgabe zugrunde, ein Wärmeaustauscherelement zu schaffen, das einfacher aufgebaut und auch leichter zu montieren ist.

Diese Aufgabe wird mit den im Patentanspruch 1 angegebenen Merkmalen gelöst.

Im Gegensatz zu der bekannten Bauart, die im Endmontagezustand letztlich aus insgesamt fünf Einzelteilen zusammengesetzt ist, besteht das erfindungsgemäße Wärmeaustauscherelement nur noch aus drei Einzelteilen, nämlich einer Tragplatte, dem Rohrregister und einer Wärmeleitfolie. Durch die erhebliche Reduzierung der Einzelteile wird der Fertigungs- und Montageaufwand deutlich gesenkt. Die Wirtschaftlichkeit bei der Belegung von Decken und Wänden zum Zwecke der Kühlung bzw. der Heizung eines Raums wird merklich heraufgesetzt.

Die Fixierung des ein Kühl- oder Heizmedium führenden Rohrregisters an der Tragplatte kann dadurch erfolgen, dass ein Sprühkleber benutzt wird, mit dem die Wärmeleitfolie unter teilweiser Umspannung des Rohrregisters an der Tragplatte festgelegt wird. Denkbar ist aber auch, dass der Wärmeleitfolie direkt ein Kleber zugeordnet ist, beispielsweise in Form einer nur einseitigen Klebeschicht, die dann beim Zusammenfügen vom Wärmeleitfolie, Rohrregister und Tragplatte die Lagefixierung des Rohrregisters gewährleistet.

Das Rohrregister besitzt einen Querschnitt mit zumindest einem abgeflachten Umfangsbereich. Dieser gelangt in Kontakt mit der Tragplatte und bewirkt dadurch einen deutlich verbesserten Wärmeübergang. Der Querschnitt kann hufeisenförmig, oval oder insbesondere dreieckförmig sein. Ein dreieckförmiger Querschnitt senkt den nicht Wärme leitenden Bereich zwischen dem Rohrregister sowie der Wärmeleitfolie einerseits und der Tragplatte andererseits auf ein Mindestmaß.

Das Rohrregister besteht vorzugsweise aus Kupfer. Denkbar ist aber auch Aluminium oder Eisen.

Die Tragplatte kann aus Gipskarton bestehen. Diese ist aus akustischen Gründen in der Regel mit einer Vielzahl von Löchern versehen. Auch Tragplatten aus Aluminium, Kupfer oder Stahlblech, vorzugsweise in gelochter Kassettenform, können zum Einsatz gelangen.

Die Wärmeleitfolie besteht aus einer Metallfolie mit einer einseitig aufgebrachten Klebeschicht. Die Metallfolie kann aus Eisen, Aluminium oder Kupfer gebildet sein. Die Klebeschicht ist ebenfalls mit einer Schutzfolie versehen.

Die Wärmeleitfolie kann aus Eisen, Aluminium oder Kupfer bestehen. Die Materialdicke bewegt sich zwischen etwa 15 µm und 30 µm.

Eine vorteilhafte Ausführungsform einer Wärmeleitfolie besteht in den Merkmalen des Patentanspruchs 2. Danach setzt sich die Wärmeleitfolie aus einer Klebefolie mit einer einseitig aufkaschierten folienartigen Schicht aus einem Nichteisenmetall, insbesondere Aluminium oder Kupfer, zusammen. Die Klebeschicht auf der anderen Seite der Nichteisenmetallschicht wird vor der Montage der Wärmeleitfolie mit einer Schutzfolie abgedeckt, die bei der Montage lediglich abgezogen werden muss.

Vorstellbar ist gemäß Patentanspruch 3 aber auch, dass die Wärmeleitfolie aus einer Klebefolie mit einer einseitig aufkaschierten folienartigen Schicht aus einem Eisenmetall besteht. Auf der anderen Seite ist dann wieder eine Klebeschicht mit einer Schutzfolie vorgesehen.

Entsprechend den Merkmalen des Patentanspruchs 4 wird ein schlangenlinienförmiges Rohrregister, das sich aus geraden Längenabschnitten und jeweils zwei einander benachbarte gerade Längenabschnitte verbindenden bogenförmigen Längenabschnitten zusammensetzt, dadurch an einer Tragplatte lagefixiert, dass entlang der geraden Längenabschnitte streifenförmige Wärmeleitfolien platziert werden. Diese Wärmeleitfolien umspannen die geraden Längenabschnitte und legen diese über ihre Klebeschichten an der Tragplatte fest.

Bei dieser Ausführungsform ist es dann gemäß Patentanspruch 5 sinnvoll, neben den streifenförmigen Wärmeleitfolien ein Vlies auf die Tragplatte aufzubringen. Ein solches Vlies kann von Natur aus schwarz sein oder es wird schwarz eingefärbt. Dies insbesondere deshalb, um bei der Betrachtung einer Decke oder einer Wand, die mit erfindungsgemäßen Wärmeaustauscherelementen belegt ist und bei denen die Tragplatten aus akustischen Gründen gelöchert sind, einen gleichmäßigen Hintergrund zu haben. Bevorzugt sind auch die diversen Wärmeleitfolien zur Tragplatte hin entsprechend schwarz eingefärbt.

Die Ausführungsform des Patentanspruchs 6 sieht ebenfalls ein Rohrregister vor, das sich aus geraden Längenabschnitten und jeweils zwei einander benachbarte Längenabschnitte verbindenden bogenförmigen Längenabschnitten zusammensetzt. Dieses Rohrregister wird dadurch unter Sicherung der gewünschten Wärmeaustauschereigenschaften auf einer Tragplatte lagefixiert, dass mindestens eine alle geraden Längenabschnitte sowie die zwischen den geraden Längenabschnitten liegenden Oberflächenbereiche der Tragplatte überdeckende, sich quer zu den geraden Längenabschnitten erstreckende bahnförmige Wärmeleitfolie über eine Klebeschicht an der Tragplatte lagefixiert wird. Je nach der Länge der geraden Längenabschnitte können auch zwei oder mehrere bahnförmige Wärmeleitfolien parallel nebeneinander verlegt werden. Die Wärmeübertragung wird auf diese Weise noch weiter verbessert.

Um bei einer Tragplatte mit Löchern, insbesondere aus Gipskarton, auch im Bereich der Löcher die Wärmeaustauschereigenschaften noch weiter zu erhöhen, ohne eine gute Akustik zu beeinträchtigen, sind entsprechend den Merkmalen des Patentanspruchs 7 die im Bereich der Löcher liegenden Abschnitte der Wärmeleitfolie in die Löcher gedrückt. Die eingedrückten Abschnitte legen sich an die inneren Oberflächen der Löcher und vergrößern somit die Wärme austauschenden Oberflächen. Die Abschnitte der Wärmeleitfolie werden vorzugsweise mit geeigneten Dornen in die Löcher gedrückt.

Zur Lagefixierung eines Wärmeaustauscherelements, insbesondere an einer Decke, werden vorteilhaft Tragschienen herangezogen, die einen U-förmigen Querschnitt aufweisen und über geeignete, zumeist längenveränderbare Tragelemente örtlich befestigt werden. Die Tragplatten der Wärmeaustauscherelemente werden an diesen Tragschienen befestigt, insbesondere geschraubt. Weist ein Wärmeaustauscherelement eine größere Flächenerstreckung auf, um einerseits die Herstellung und andererseits die Montage vor Ort zu vereinfachen, so sehen die Merkmale des Patentanspruchs 8 vor, dass zwischen die Tragplatte und die Tragschienen Distanzleisten eingegliedert werden. Die bevorzugt aus Gipskarton bestehenden Distanzleisten enden vor den bogenförmigen Längenabschnitten. Da die Distanzleisten die Dicke des Rohrregisters aufweisen, kann dieses folglich problemlos über die gesamte Flächenerstreckung der Tragplatte verlegt werden, ohne dass die Tragschienen die Verlegung behindern.

Ein vorteilhaftes Verfahren zur Herstellung eines Wärmeaustauscherelements mit einem schlangenlinienförmigen Rohrregister als lagefixiertes Bestandteil einer Tragplatte aus Metall oder Gipskarton wird in den Merkmalen des Patentanspruchs 9 erblickt.

Bei diesem Verfahren wird zunächst ein Formkörper bereit gestellt, in den von seiner Oberfläche her eine Gravur eingearbeitet ist, die einerseits der Konfiguration und andererseits dem Querschnitt des Rohrregisters entspricht. Auf die Oberfläche wird eine Wärmeleitfolie gelegt und auf die Wärmeleitfolie nach Entfernung einer eine Klebeschicht abdeckenden Schutzfolie kongruent zur Gravur das Rohrregister. Danach wird die Tragplatte auf das Rohrregister gelegt und dieses gemeinsam mit der Wärmeleitfolie in die Gravur gedrückt. Die Wärmeleitfolie umspannt dadurch formschlüssig das Rohrregister und legt dieses an der Tragplatte fest. Weist das Rohrregister vor der Montage noch einen kreisrunden Querschnitt auf, kann im Zuge des Zusammenbaus dieser Querschnitt in den durch die Gravur vorgegebenen Querschnitt umgeformt werden. Es ist also nur ein einziger Verfahrensschritt erforderlich, um das Rohrregister ordnungsgemäß Wärme übertragend an der Tragplatte zu fixieren.

Besteht die Tragplatte aus Gipskarton und weist sie Löcher auf, so kann es entsprechend den Merkmalen des Patentanspruchs 10 ferner von Vorteil sein, dass die im Bereich der Löcher liegenden Abschnitte der Wärmeleitfolie mit einem Dornwerkzeug in die Löcher gedrückt werden. Der Wärmeübergang von dem in dem Rohrregister strömenden Medium auf die Umgebung, z.B. in einen Wohn- oder Büroraum, wird auf diese Weise erheblich verbessert.

Die Erfindung ist nachfolgend anhand von in den Zeichnungen dargestellten Ausführungsbeispielen näher erläutert. Es zeigen:
- Figur 1: eine Ansicht auf die Innenseite eines Wärmeaustauscherelements;
- Figur 2: in vergrößertem Maßstab einen vertikalen Querschnitt durch die Darstellung der Figur 1 entlang der Linie II-II in Richtung der Pfeile IIa gesehen;
- Figur 3: den Ausschnitt III der Figur 2;
- Figur 4: den Ausschnitt III der Figur 2 gemäß einer weiteren Ausführungsform;
- Figur 5: den Ausschnitt III der Figur 2 gemäß einer dritten Ausführungsform;
- Figur 6: eine Teilansicht auf die Innenseite eines Wärmeaustauscherelements gemäß einer weiteren Ausführungsform;
- Figur 7: einen vertikalen Querschnitt durch die Darstellung der Figur 6 entlang der Linie VII-VII in Richtung der Pfeile VIIa gesehen;
- Figur 8: in vergrößerter Darstellung einen vertikalen Querschnitt durch ein Wärmeaustauscherelement ähnlich der Ausführungsform der Figur 5 mit einem Dornwerkzeug und
- Figur 9: im vertikalen Teilquerschnitt ein Zusammenbauschema eines Wärmeaustauscherelements.

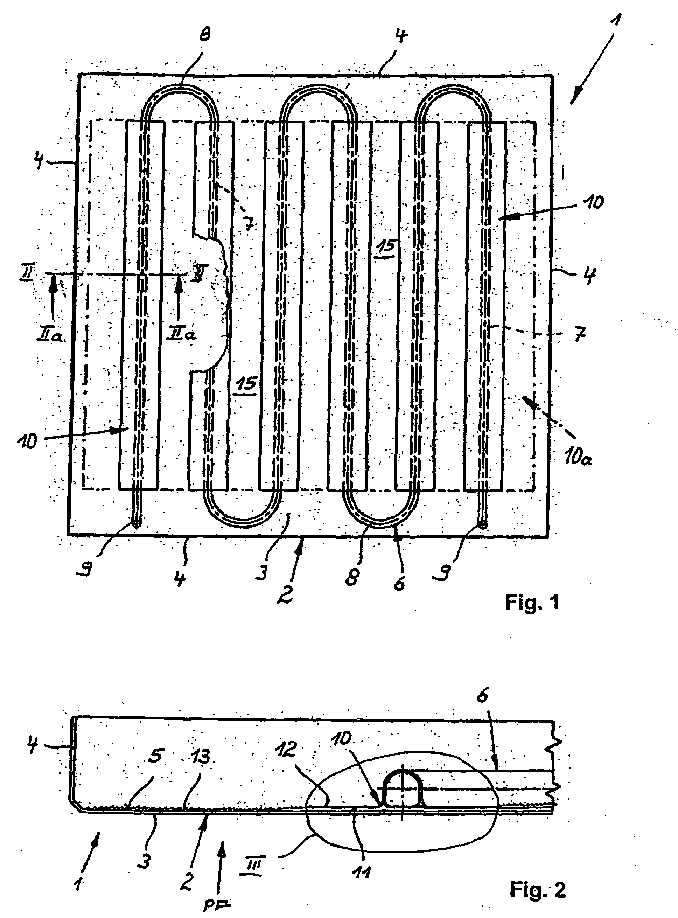

In den Figuren 1 und 2 ist mit 1 ein Wärmeaustauscherelement bezeichnet, das in Mehrfachanordnung unmittelbar an einer Decke oder einer Wand eines zu temperierenden Raums befestigt wird. Das Wärmeaustauscherelement 1 umfasst eine kassettenartige Tragplatte 2 aus Leichtmetall, die sich aus einem Boden 3 und randseitig des Bodens 3 senkrecht abstehenden Rändern 4 zusammensetzt. Die Tragplatte 2 kann durch Stanzen und Abkanten einer Platine gebildet sein.

Auf der Innenseite 5 des Bodens 3 erstreckt sich ein schlangenlinienförmig konfiguriertes Rohrregister 6 aus einem Kupferrohr mit hufeisenförmigern Querschnitt. Das Rohrregister 6 besteht aus geraden Längenabschnitten 7 und jeweils zwei einander benachbarte gerade Längenabschnitte 7 wechselweise verbindenden bogenförmigen Längenabschnitten 8. Das Rohrregister 6 wird mit einem Fluid beaufschlagt, das je nach den Erfordernissen den Raum kühlt oder beheizt. Zu diesem Zweck sind die Enden 9 des Rohrregisters 6 mit den Enden benachbarter Rohrregister fluidleitend verbunden. Die Verbindungen sind nicht näher dargestellt.

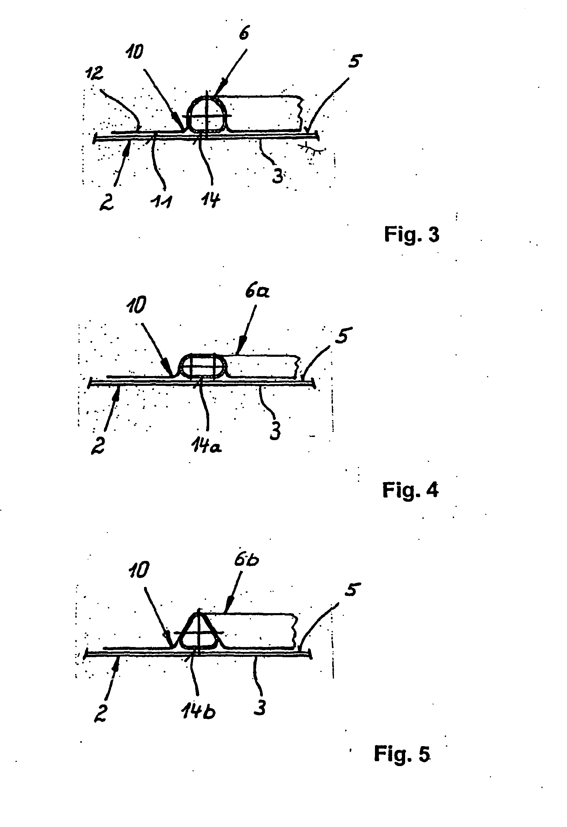

Zur Lagefixierung des Rohrregisters 6 auf der Innenseite 5 der Tragplatte 2 dienen streifenförmige Wärmeleitfolien 10 (siehe auch Figur 3). Beim Ausführungsbeispiel besteht jede Wärmeleitfolie 10 aus einer Klebefolie 11 mit einer einseitig aufkaschierten folienartigen Schicht 12 aus einem Nichteisenmetall, insbesondere Aluminium oder Kupfer. Wie insbesondere die Figuren 2 und 3 erkennen lassen, wird nach dem Abziehen einer nicht näher dargestellten Schutzfolie von der Klebefolie 11 die Wärmeleitfolie 10 entlang der geraden Längenabschnitte 7 diese U-förmig ummantelnd auf der Innenseite 5 der Tragplatte 2 festgelegt.

Da aus akustischen Gründen die Tragplatte 2 des Wärmeaustauscherelements 1 häufig mit in den Boden 3 eingebrachten Löchern versehen ist, können die Oberflächenbereiche 15 der Innenseite 5 des Bodens 3 der Tragplatte 2 neben den streifenförmigen Wärmeleitfolien 10 mit einem insbesondere schwarzen Vlies 13 bedeckt sein. Schwarz deshalb, um bei einer Betrachtung des Wärmeaustauscherelements 1 in Richtung des Pfeils PF der Figur 2 einen gleichmäßigen dunklen Hintergrund hinter den Löchern zu sehen. Zu diesem Zweck sind auch die dem Boden 3 zugewandten Unterseiten der Wärmeleitfolien 10 schwarz eingefärbt. Das Rohrregister 6 erstreckt sich so über den Boden 3 der Tragplatte 2, dass keine Löcher bedeckt werden.

Aufgrund deshufeisenförmigen Querschnitts gelangt das Rohrregister 6 mit einem abgeflachten Umfangsbereich 14 mit der Innenseite 5 des Bodens 3 der Tragplatte 2 in flächigen Kontakt. Der Wärmeaustausch wird dadurch verbessert.

Statt des hufeisenförmigen Querschnitts der Figuren 2 und 3 kann es entsprechend der Darstellung der Figur 4 auch möglich sein, einem Rohrregister 6a einen ovalen Querschnitt zu geben, welcher ebenfalls einen abgeflachten Umfangsbereich 14a zur großflächigen Anlage an der Innenseite 5 des Bodens 3 einer Tragplatte 2 gewährleistet.

Noch vorteilhafter im Hinblick einerseits auf einen optimalen Wärmeübergang zwischen einem Rohrregister 6b und dem Boden 5 einer Tragplatte 2 und andererseits zur Erzielung einer eng anliegenden Wärmeleitfolie 10 an dem Rohrregister 6b weist dieses gemäß Figur 5 einen dreieckigen Querschnitt auf. Aufgrund des dreieckigen Querschnitts hat das Rohrregister 6b auch einen abgeflachten Umfangsbereich 14b, mit dem es satt an der Innenseite 5 anliegt.

Während in den Figuren 1 und 2 für jeden geraden Längenabschnitt 7 des Rohrregisters 6 eine gesonderte streifenförmige Wärmeleitfolie 10 zu Lagefixierung des Rohrregisters 6 an der Tragplatte 2 eingesetzt wird, kann es entsprechend der strichpunktierten Linienführung in Figur 1 auch denkbar sein, dass das Rohrregister 6 durch mindestens eine alle geraden Längenabschnitte 7 sowie die zwischen den geraden Längenabschnitten 7 liegenden Oberflächenbereiche 15 der Innenseite 5 der Tragplatte 2 überdeckende, sich quer zu den geraden Längenabschnitten 7 erstreckende bahnförmige Wärmeleitfolie 10a an der Tragplatte 2 lagefixiert ist. Eine solche bahnförmige Wärmeleitfolie 10a kann ebenfalls aus einer Klebefolie 11 mit einer einseitig aufkaschierten folienartigen Schicht 12 aus einem Nichteisenmetall oder aus einem Eisenmetall bestehen.

Darüberhinaus ist es vorstellbar, dass sowohl eine streifenförmige Wärmeleitfolie 10 als auch eine bahnförmige Wärmeleitfolie 10a aus einer Metallfolie mit einer einseitig aufgebrachten Klebeschicht besteht.

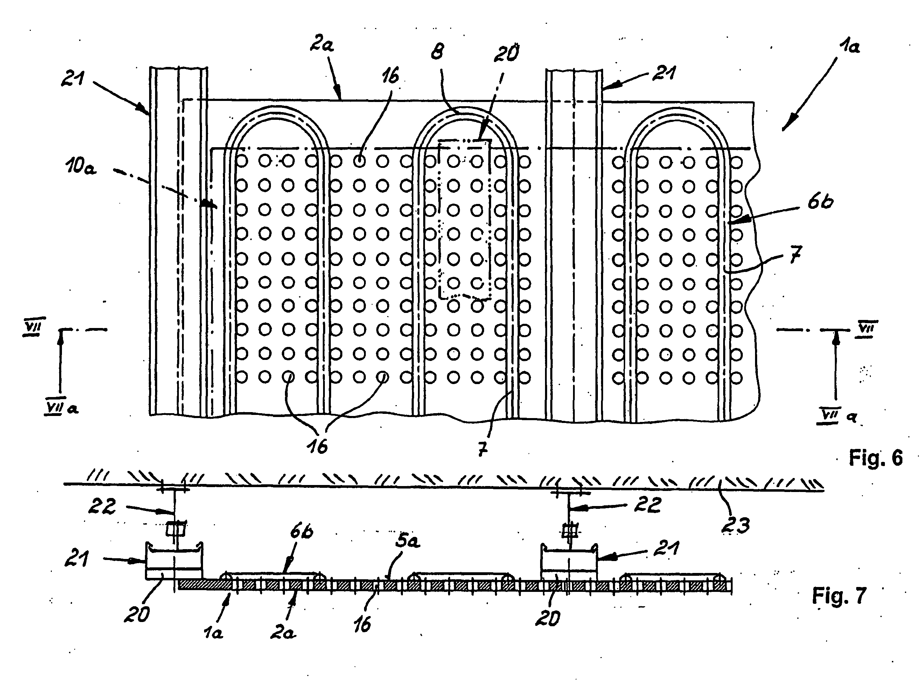

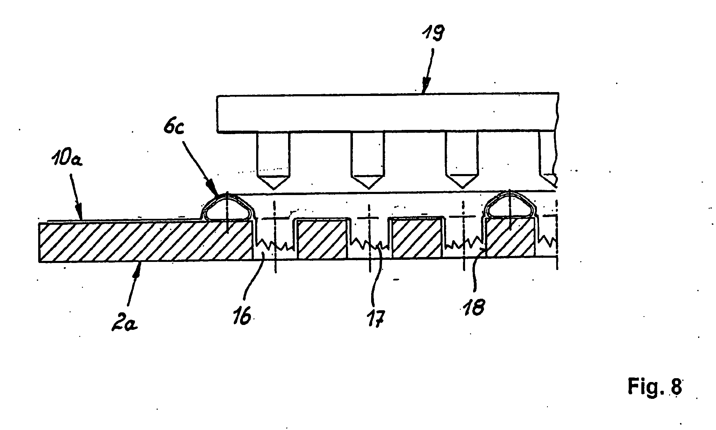

In den Figuren 6 und 7 ist ein Wärmeaustauscherelement 1a dargestellt, das eine Tragplatte 2a aus Gipskarton mit einer Vielzahl von Löchern 16 aufweist. Auf der Innenseite 5a der Tragplatte 2a ist ein schlangenlinienförmiges Rohrregister 6b verlegt, das einen dreieckförmigen Querschnitt gemäß Figur 5 aufweist. Die Lagefixierung des Rohrregisters 6b auf der Innenseite 5a erfolgt mit Hilfe einer bahnförmigen Wärmeleitfolie 10a. Um hierbei die Akustik nicht zu beeinträchtigen und zusätzlich den Wärmeaustausch zu verbessern, sind die Abschnitte 17 der Wärmeleitfolie 10a, welche im Bereich der Löcher 16 liegen, eingedrückt (Figur 8), wobei sich die eingedrückten Abschnitte 17 an die Wandungen 18 der Löcher 16 legen, so dass die Wärme austauschende Fläche der Wärmeleitfolie 10a vergrößert wird.

Die Abschnitte 17 der Wärmeleitfolie 10a können mit Hilfe eines Domwerkzeugs 19 in die Löcher 16 gedrückt werden, das ebenfalls aus der Figur 8 erkennbar ist.

Das Wärmeaustauscherelement 1a der Figuren 6 und 7 wird unter Eingliederung von Distanzleisten 20 aus Gipskarton unterhalb von sich parallel zu den geraden Längenabschnitten 7 erstreckenden U-förmigen Tragschienen 21 aus Leichtmetall befestigt, insbesondere angeschraubt. Die Distanzleisten 20 haben eine Dicke, die nur geringfügig größer ist als die Dicke des Rohrregisters 6b. Dieser Aufbau ermöglicht es, das Rohrregister 6b auch bei in der Flächenerstreckung größeren Wärmeaustauscherelementen 1a problemlos unter einwandfreier Anlage an der Tragplatte 2a durchgehen zu lassen, indem die Distanzleisten 20, welche bogenförmige Längenabschnitte 8 schneiden würden, kurz vor den bogenförmigen Längenabschnitten 8 enden. Dies ist mittig der Figur 6 in strichpunktierter Linienführung andeutungsweise veranschaulicht.

Die Tragschienen 21 selber werden über in der Länge verstellbare Tragelemente 22 an der Decke 23 eines Raums aufgehängt. Auf diese Weise kann eine einwandfreie horizontale Ausrichtung aller Wärmeaustauscherelemente 1 a gewährleistet werden (Figur 7).

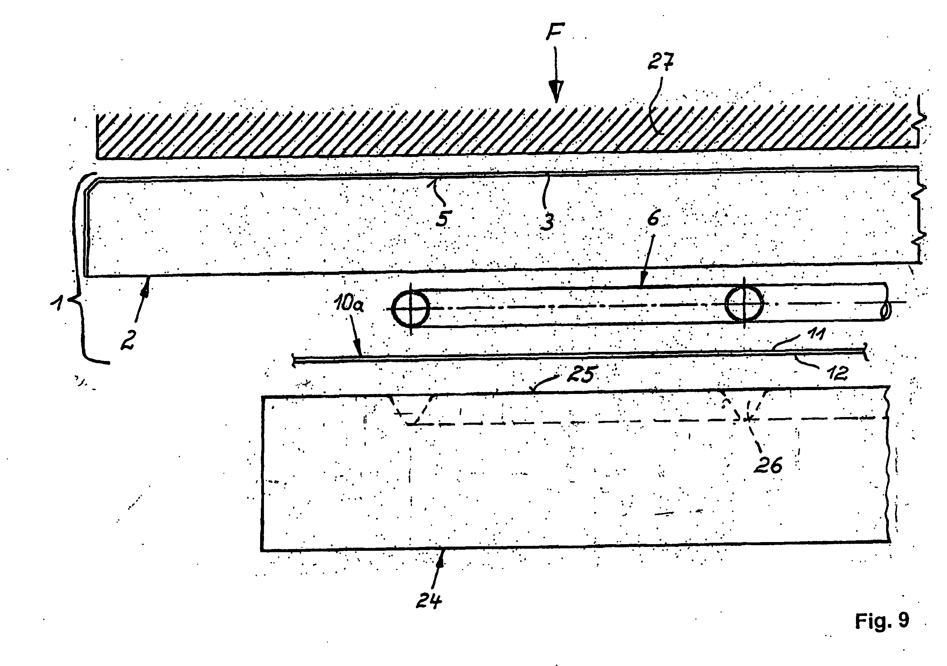

In der Figur 9 ist schematisch der Zusammenbau eines Wärmeaustauscherelements 1 veranschaulicht, das eine kassettenartige Tragplatte 2 gemäß den Figuren 1 und 2 sowie ein Rohrregister 6b mit einem dreieckigen Querschnitt entsprechend der Figur 5 aufweist.

Zum Zusammenbau der vorgeformten Tragplatte 2 und des ebenfalls vorgeformten, im Querschnitt aber noch runden Rohrregisters 6 wird ein Formkörper 24 bereit gestellt, der von seiner Oberfläche 25 ausgehend eine der Konfiguration und dem Querschnitt des Rohrregisters 6b der Figur 5 entsprechende Gravur 26 aufweist. Auf die Oberfläche 25 wird anschließend eine bahnförmige Wärmeleitfolie 10a gelegt, die aus einer Klebefolie 11 mit einer einseitig aufkaschierten folienartigen Schicht 12 aus einem Nichteisenmetall besteht. Die folienartige Schicht 12 ist der Oberfläche 25 zugewandt. Auf der Klebefolie 11 der Wärmeleitfolie 10a befindet sich zunächst noch eine Schutzfolie. Nach dem Abziehen der Schutzfolie wird das Rohrregister 6 kongruent zur Gravur 26 im Formkörper 24 auf die Wärmeleitfolie 10a gelegt. Danach wird die Tragplatte 2 auf das Rohrregister 6 gelegt, wobei die Innenseite 5 des Bodens 3 der Tragplatte 2 mit dem Rohrregister 6 in Kontakt gelangt.

Nunmehr wird mit Hilfe einer Druckplatte 27 eine Kraft F in Richtung des Pfeils aufgebracht, durch welche unter formschlüssiger Umspannung des Rohrregisters 6 durch die Wärmeleitfolie 10a das Rohrregister 6 nicht nur gleichförmig verformt, sondern auch an der Innenseite 5 des Bodens 3 lagefixiert wird. Zur Formgebung des dann dreieckigen Rohrregisters 6b und zu seiner Fixierung ist mithin ein einziger Arbeitsschritt erforderlich.

### Bezugszeichenaufstellung

- 1 -: Wärmeaustauscherelement
- 1a -: Wärmeaustauscherelement
- 2 -: Tragplatte v. 1
- 2a -: Tragplatte v. 1a
- 3 -: Boden v. 2
- 4 -: Ränder v. 2
- 5 -: Innenseite v. 3
- 5a -: Innenseite v. 2a
- 6 -: Rohrregister
- 6a -: Rohrregister
- 6b -: Rohrregister
- 7 -: gerade Längenabschnitte v. 6, 6b
- 8 -: bogenförmige Längenabschnitte v. 6, 6b
- 9 -: Enden v. 6
- 10 -: Wärmeleitfolien
- 10a -: Wärmeleitfolien
- 11 -: Klebefolie
- 12 -: AMetallschicht v. 10
- 13 -: Vlies
- 14 -: Umfangsbereich v. 6
- 14a -: Umfangsbereich v. 6a
- 14b -: Umfangsbereich v. 6b
- 15 -: Oberflächenbereiche v. 5
- 16 -: Löcher in 2a
- 17 -: Abschnitte v. 10a
- 18 -: Wandungen v. 16
- 19 -: Dornwerkzeug
- 20 -: Distanzleisten
- 21 -: Tragschienen

## Patentansprüche

1. Wärmeaustauscherelement, das ein mit einem Kälte- oder Heizmedium beaufschlagbares schlangenlinienförmiges Rohrregister (6, 6a-c) aufweist, welches über einen abgeflachten Umfangsbereich (14, 14a, 14b) ausschließlich mit Hilfe mindestens einer Wärmeleitfolie (10, 10a) unmittelbar an einer an einer Decke (23) oder einer Wand festlegbaren Tragplatte (2, 2a) aus Metall oder Gipskarton durch Klebung lagefixiert ist, wobei die Wärmeleitfolie (10, 10a) das Rohrregister (6, 6a, 6b) formschlüssig umspannt und dieses dadurch auf der Tragplatte (2, 2a) festlegt, wobei die Wärmeleitfolie (10, 10a) aus einer Metallfolie mit einer einseitig aufgebrachten Klebeschicht besteht.

2. Wärmeaustauscherelement nach Patentanspruch 1, bei welchem die Wärmeleitfolie (10, 10a) aus einer Klebefolie (11) mit einer einseitig aufkaschierten folienartigen Schicht (12) aus einem Nichteisenmetall, insbesondere Aluminium oder Kupfer, besteht.

3. Wärmeaustauscherelement nach Patentanspruch 1, bei welchem die Wärmeleitfolie (10, 10a) aus einer Klebefolie (11) mit einer einseitig aufkaschierten folienartigen Schicht (12) aus einem Eisenmetall besteht.

4. Wärmeaustauscherelement nach einem der Patentansprüche 1 bis 3, bei welchem das sich aus geraden Längenabschnitten (7) und jeweils zwei einander benachbarte gerade Längenabschnitte (7) verbindenden bogenförmigen Längenabschnitten (8) zusammen setzende Rohrregister (6, 6a, 6b) nur durch sich entlang der geraden Längenabschnitte (7) erstreckende streifenförmige Wärmeleitfolien (10) an der Tragplatte (2) lagefixiert ist.

5. Wärmeaustauscherelement nach Patentanspruch 4, bei welchem die Oberflächenbereiche (15) der Tragplatte (2) neben den streifenförmigen Wärmeleitfolien (10) mit Vlies (13) belegt sind.

6. Wärmeaustauscherelement nach einem der Patentansprüche 1 bis 3, bei welchem das sich aus geraden Längenabschnitten (7) und jeweils zwei einander benachbarte gerade Längenabschnitte (7) verbindenden bogenförmigen Längenabschnitten (8) zusammen setzende Rohrregister (6, 6a, 6b) durch mindestens eine alle geraden Längenabschnitte (7) sowie die zwischen den geraden Längenabschnitten (7) liegenden Oberflächenbereiche (15) der Tragplatte (2) überdeckende, sich quer zu den geraden Längenabschnitten (7) erstreckende bahnförmige Wärmeleitfolie (10a) an der Tragplatte (2) lagefixiert ist.

7. Wärmeaustauscherelement nach Patentanspruch 6, bei welchem die Tragplatte (2a) aus Gipskarton besteht und mit einer Vielzahl von Löchern (16) versehen ist, wobei die im Bereich der Löcher (16) liegenden Abschnitte (17) der Wärmeleitfolie (10a) in die Löcher (16) gedrückt sind.

8. Wärmeaustauscherelement nach einem der Patentansprüche 1 bis 7, bei welchem sich das Rohrregister (6, 6a, 6b) aus geraden Längenabschnitten (7) und jeweils zwei einander benachbarte gerade Längenabschnitte (7) verbindenden bogenförmigen Längenabschnitten (8) zusammen setzt und die Tragplatte (2a) unter Eingliederung von Distanzleisten (20) unterhalb von sich parallel zu den geraden Längenabschnitten (7) erstreckenden Tragschienen (21) befestigt ist.

9. Verfahren zur Herstellung eines Wärmeaustauscherelements (1, 1 a) mit einem schlangenlinienförmigen Rohrregister (6, 6a, 6b) als lagefixiertes Bestandteil einer Tragplatte (2, 2a) aus Metall oder Gipskarton, bei welchem zunächst auf die Oberfläche (25) eines Formkörpers (24) mit einer von der Oberfläche (25) ausgehenden, der Konfiguration und dem Querschnitt des Rohrregisters (6, 6a, 6b) entsprechenden Gravur (26) mindestens eine Wärmeleitfolie (10, 10a) und dann auf die Wärmeleitfolie (10, 10a) kongruent zur Gravur (26) das Rohrregister (6, 6a, 6b) verlegt werden, worauf mit Hilfe der Tragplatte (2, 2a) das Rohrregister (6, 6a, 6b) und die Wärmeleitfolie (10, 10a) in die Gravur (26) bzw. an die Tragplatte (2, 2a) gedrückt werden und hierbei das Rohrregister (6, 6a, 6b) an der Tragplatte (2, 2a) lagefixiert wird.

10. Verfahren nach Patentanspruch 9 mit einer Tragplatte (2a) aus Gipskarton, in die eine Vielzahl von Löcher (16) eingebracht ist, bei welchem die im Bereich der Löcher (16) liegenden Abschnitte (17) der Wärmeleitfolie (10a) mit einem Dornwerkzeug (19) in die Löcher (16) gedrückt werden.

## Claims

1. Heat exchanger element which has a serpentine pipe register (6, 6a-c), which can be acted upon by a refrigerating or heating medium and is fixed in position by adhesion by means of a flattened peripheral region (14, 14a, 14b) exclusively with the aid of at least one heat conducting foil (10, 10a) directly on a support plate (2, 2a) made of metal or plasterboard, which can be fixed to a ceiling (23) or a wall, wherein the heat conducting foil (10, 10a) positively encompasses the pipe register (6, 6a, 6b) and fixes it thereby on the support plate (2, 2a), the heat conducting foil (10, 10a) consisting of a metal foil with an adhesive layer applied on one side.

2. Heat exchanger element according to claim 1, wherein the heat conducting foil (10, 10a) consists of an adhesive foil (11) with a foil-like layer (12) laminated on on one side made of a non-ferrous metal, in particular aluminium or copper.

3. Heat exchanger element according to claim 1, wherein the heat conducting foil (10, 10a) consists of an adhesive foil (11) with a foil-like layer (12) laminated on on one side made of a ferrous metal.

4. Heat exchanger element according to any one of claims 1 to 3, wherein the tube register (6, 6a, 6b) composed of straight longitudinal portions (7) and arcuate longitudinal portions (8) connecting two respective mutually adjacent straight longitudinal portions (7) is only fixed in position on the support plate (2) by strip-shaped heat conducting foils (10) extending along the straight longitudinal portions (7).

5. Heat exchanger element according to claim 4, in which the surface regions (15) of the support plate (2) next to the strip-shaped heat conducting foils (10) are covered with nonwoven (13).

6. Heat exchanger element according to any one of claims 1 to 3, in which the pipe register (6, 6a, 6b) composed of straight longitudinal portions (7) and arcuate longitudinal portions (8) connecting two respective mutually adjacent straight longitudinal portions (7) is fixed in position on the support plate (2) by means of at least one web-shaped heat conducting foil (10a) covering all the straight longitudinal portions (7) and the surface regions (15), which lie between the straight longitudinal portions (7), of the support plate (2) and extending transversely to the straight longitudinal portions (7).

7. Heat exchanger element according to claim 6, wherein the support plate (2a) consists of plasterboard and is provided with a plurality of holes (16),
wherein the portions (17) of the heat conducting foil (10a) located in the region of ' the holes (16) are pressed into the holes (16).

8. Heat exchanger element according to any one of claims 1 to 7, wherein the pipe register (6, 6a, 6b) is composed of straight longitudinal portions (7) and arcuate longitudinal portions (8) connecting two respective mutually adjacent straight longitudinal portions (7) and the support plate (10a) is fastened, incorporating spacer strips (20), below support rails (21) extending parallel to the straight longitudinal portions (7).

9. Method for producing a heat exchanger element (1, 1 a) with a serpentine pipe register (6, 6a, 6b) as a component, which is fixed in position, of a support plate (2, 2a) made of metal or plasterboard, wherein at least one heat conducting foil (10, 10a) is firstly laid on the surface (25) of a moulding body (24) with an engraving (26) coming from the surface (25) and corresponding to the configuration and the cross-section of the tube register (6, 6a, 6b) and then the pipe register (6, 6a, 6b) is laid on the heat conducting foil (10, 10a) congruently with the engraving (26), whereupon, with the aid of the support plate (2, 2a), the pipe register (6, 6a, 6b) and the heat conducting foil (10, 10a) are pressed into the engraving (26) or onto the support plate (2, 2a) and the pipe register (6, 6a, 6b) is thus fixed in position on the support plate (2, 2a).

10. Method according to claim 9, with a support plate (2a) made of plasterboard, into which a plurality of holes (6) is introduced, wherein the portions (17) of the heat conducting foil (10a) located in the region of the holes (16) are pressed with a mandrel tool (19) into the holes (16).

## Revendications

1. Elément d'échangeur de chaleur comportant un registre tubulaire (6, 6a-c), en forme de serpentin, recevant un milieu réfrigérant ou chauffant, ce registre étant fixé en position par collage par l'intermédiaire d'une zone périphérique (14, 14a, 14b) aplatie, exclusivement par au moins un film thermoconducteur (10, 10a), directement à une plaque de support (2, 2a) en métal ou en carton-plâtre, fixé à un plafond (23) ou à un mur,
le film thermoconducteur (10, 10a) enserrant le registre tubulaire (6, 6a, 6b) par une liaison par la forme et fixant ainsi celui-ci à la plaque de support (2, 2a),
le film thermoconducteur (10, 10a) étant composé d'un fil métallique avec une couche de colle appliquée sur une face.

2. Elément d'échangeur de chaleur selon la revendication 1,
selon lequel
le film thermoconducteur (10, 10a) se compose d'un film adhésif (11) avec une couche (12) en forme de film marouflé sur une face, cette couche étant en un métal non ferreux notamment en aluminium ou en cuivre.

3. Elément d'échangeur selon la revendication 1,
selon lequel
le film thermoconducteur (10, 10a) se compose d'un film adhésif (11) avec une couche (12) en forme de film marouflé sur une face, cette couche étant en un métal ferreux.

4. Elément d'échangeur selon l'une des revendications 1 à 3,
selon lequel
le registre tubulaire (6, 6a, 6b) qui se compose de segments longitudinaux droits (7) avec chaque fois deux segments longitudinaux (8) en forme d'arc de cercle, reliant deux segments longitudinaux droits (7), voisins, est fixé en position à la plaque de support (2) uniquement par des films thermoconducteurs (10) en forme de ruban s'étendant seulement le long des segments longitudinaux droits (7).

5. Elément d'échangeur selon la revendication 4,
selon lequel
les zones de surface (15) de la plaque de support (2) sont occupées par un non-tissé (13) à côté des films thermoconducteurs (10) en forme de bande.

6. Elément d'échangeur selon l'une des revendications 1 à 3,
selon lequel
le registre tubulaire (6, 6a, 6b) qui se compose de segments longitudinaux droits (7) et chaque fois de segments longitudinaux en forme d'arc (8) reliant deux segments longitudinaux droits (7), voisins, est fixé en position à la plaque de support (2) par un film thermoconducteur (10a) en forme de bande s'étendant transversalement aux segments longitudinaux droits (7), couvrant au moins tous les segments longitudinaux droits (7) ainsi que les zones de surface (15) de la plaque de support (2) situées entre les segments longitudinaux droits (7).

7. Elément d'échangeur selon la revendication 6,
selon lequel
la plaque de support (2a) est en carton-plâtre et comporte un ensemble de trous (16) et les segments (17) du film thermoconducteur (10a) situés dans la zone des trous (16) sont enfoncés dans les trous (16).

8. Elément d'échangeur selon l'une des revendications 1 à 7,
selon lequel
le registre tubulaire (6, 6a, 6b) se compose de segments longitudinaux droits (7) et de segments longitudinaux en forme d'arc (8) reliant chaque fois deux segments longitudinaux droits, (7) voisins et la plaque de support (2a) est fixée avec intégration de longerons d'écartement (20) en dessous de rails de support (21) parallèles aux segments longitudinaux droits (7).

9. Procédé de fabrication d'un élément d'échangeur de chaleur (1, 1a) comportant un registre tubulaire (6, 6a, 6b) en forme de serpentin, comme composant fixé en position appartenant à une plaque de support (2, 2a) en métal ou en carton plâtre,
selon lequel
- on applique tout d'abord au moins un film thermoconducteur (10, 10a) sur la surface (25) d'un corps de forme (24) avec une gravure (26) partant de la surface supérieure (25) et correspondant à la configuration et à la section du registre tubulaire (6, 6a, 6b), puis,
- sur le film thermoconducteur (10, 10a) et selon la gravure (26) on place le registre tubulaire (6, 6a, 6b),
- puis à l'aide de la plaque de support (2, 2a), on pousse le registre tubulaire (6, 6a, 6b) et le film thermoconducteur (10, 10a) dans la gravure (26) ou contre la plaque de support (2, 2a) et on fixe ainsi en position le registre tubulaire (6, 6a, 6b) contre la plaque de support (2, 2a).

10. Procédé selon la revendication 9, appliqué à une plaque de support (2a) en carton plâtre munie d'un grand nombre de trous (16),
selon lequel
les segments (17) du film thermoconducteur (10a) situés dans la zone des trous (16) sont poussés dans les trous (16) avec un outil à broches (19).
